# NEUE EUROPÄISCHE PATENTSCHRIFT

(11) **EP 2 465 832 B2**
(45) Veröffentlichungstag und Bekanntmachung des Hinweises auf die Entscheidung über den Einspruch: **09.03.2022**
(45) Hinweis auf die Patenterteilung: 21.02.2018
(21) Anmeldenummer: 11193150.7
(22) Anmeldetag: 13.12.2011
(51) Int. Cl.: C03C 17/00, C03C 17/23

(54) **Verfahren zur Herstellung einer reflexionsmindernden Beschichtung**
Method for manufacturing an anti-reflective coating
Procédé de fabrication d'un revêtement anti-réfléchissant

(30) Priorität: 17.12.2010 DE 102010054858
(43) Veröffentlichungstag der Anmeldung: 20.06.2012
(73) Patentinhaber: INTERPANE Entwicklungs-und Beratungsgesellschaft mbH, 37697 Lauenförde (DE)
(72) Erfinder: Kappertz, Oliver, Dr., 33098 Paderborn (DE); Datz, Marc, 37671 Höxter-Stahle (DE); Weis, Hans-Jörg, Dr., 37671 Höxter (DE); Herlitze, Lothar, Dr., 37691 Derental (DE)
(74) Vertreter: Körfer, Thomas

(56) Entgegenhaltungen:
- EP-A1- 1 670 049
- EP-A1- 2 065 120
- EP-A2- 0 142 039
- WO-A1-2010/139908
- WO-A1-2010/142126
- WO-A2-2008/096089
- DE-A1- 4 216 508
- DE-A1- 19 918 811
- DE-A1-102005 007 825
- US-A1- 2004 028 809
- US-A1- 2004 185 679
- US-A1- 2005 237 895
- US-A1- 2009 220 774
- US-A1- 2010 025 387
- US-B1- 6 177 131
- DATABASE WPI Week 200972 Thomson Scientific, London, GB; AN 2009-Q57587 XP002678928, & RU 2 365 648 C1 (AS KOLA RARE ELEMENTS&RAW MINERALS INS) 27. August 2009 (2009-08-27)
- CONRADS et al.: "Plasma generation and plasma sources", Plasma Sources Sci. Technol., vol. 9, no. 4, 1 November 2000 (2000-11-01), pages 441-454,
- "Permittivité", Wikipedia ,
- Janson et al: "Preparation of thin silica films with controlled thickness and tunable refractive index", ,

## Beschreibung

Die Erfindung bezieht sich auf ein Verfahren zur Herstellung auf einem Substrat einer reflexionsmindernden Schicht.

Durch Reflexion des sichtbaren und nicht sichtbaren Spektralanteils des Sonnenlichts sinkt die Effizienz der Sonnenlichtausnutzung beispielsweise bei solaren Wärmeabsorbern oder Fotovoltaik-Modulen, die als Abdeckung eine Glasscheibe aufweisen. Gleiches gilt auch beispielsweise für Gewächshausverglasungen, die in der Regel so konzipiert sein sollten, dass bei zunehmender Lichteinstrahlung der Innenraum entsprechend erwärmt wird. Bei Solarkollektoren für die Warmwassergewinnung sowie Gewächshausverglasungen trägt das gesamte Spektrum des Sonnenlichts zur Erwärmung bei. Bei der Stromerzeugung mittels Fotovoltaik-Modulen wird auf Grund des physikalischen Grundprinzips von Solarzellen nur Strahlung bis zu einer maximalen Wellenlänge zu Strom umgesetzt. Diese Wellenlänge ist abhängig vom Typ der Solarzelle und liegt für die meisten heute gebräuchlichen Typen bei 1200 nm oder darunter.

Beim Übergang des Lichtes von Luft mit einem Brechungsindex von nahezu n=1 zu Glas mit einem Brechungsindex etwa n=1,5 wird auf Grund des Brechungsindexunterschieds ein Teil des Lichts reflektiert. Durch eine Beschichtung der Glasoberflächen mit einer Schicht, deren Brechungsindex und Schichtdicke so gewählt ist, dass sich die beiden reflektierten Strahlen nahezu auslöschen, wird der reflektierte Lichtanteil gesenkt und gemäß dem Prinzip der Energieerhaltung der transmittierte Lichtanteil erhöht. Eine optimale Entspiegelung von Luft zu Glas ergibt sich aus den Fresnel'schen Formeln bei einem Brechungsindex von n=√1, 5=1, 22. Zusammen mit der λ/4 -Bedingung für eine destruktive Interferenz ergibt sich also für Licht im sichtbaren Spektralbereich eine Schichtdicke von ca. 50-200 nm für die optimale Entspiegelungsschicht. Für Licht mit ca. 550 nm Wellenlänge, das die größte Intensität im Sonnenspektrum darstellt, beträgt die theoretisch optimale Schichtdicke 113 nm.

Eine reflexmindernde Schicht und ein Verfahren zur Herstellung eines transparenten Substrats mit einem Brechungsindex von n < 1,4 mit einer reflexmindernden Schicht von n < 1,32 wird in der DE 10 2005 007 825 A1 beschrieben. Es handelt sich dabei um eine Einfachschicht, die die Elemente Silizium, Sauerstoff, Kohlenstoff und Wasserstoff enthält und im Gegensatz zu aufwendig herstellbaren und kostenintensiven Interferenzschichten, einfach und günstig herstellbar ist. Gesteuert durch die prozentuale Zusammensetzung der einzelnen Elemente bildet sich eine Gitter-Struktur aus Silizium und Sauerstoff aus, in denen durch Anlagerung von organischen Gruppen Hohlräume entstehen. Die Hohlräume entsprechen in ihrem Brechungsindex in etwa dem der Luft und senken im Mittel den Brechungsindex der Schicht ab. Um den Brechungsindex n weiter zu reduzieren muss der Anteil an organischen Gruppen gesenkt werden.

Im Stand der Technik wird der Kohlenstoff- und Wasserstoffgehalt durch eine Temperaturbehandlung der Schicht erreicht. Dabei wird die Beschichtung zusammen mit dem Substrat für einen Zeitraum von ca. 15-30 Minuten einer Temperatur von 250-800 °C ausgesetzt.

Die Reduzierung des Kohlenstoff- und Wasserstoffgehalts durch Tempern hat den Nachteil, dass dies unter hohem Energieeinsatz erfolgt. So wird beispielsweise zur Erwärmung einer 4 mm dicken, beschichteten Floatglasscheibe eine Energie von etwa 1,5 kWh pro m² benötigt, um diese um 600 K zu erwärmen. Bei einer zu starken Aufheizung oder auch bei einem zu schnellen Energieeintrag ergibt sich des Weiteren der Nachteil, dass die Elemente der Schicht versintern und die Poren verschwinden, wobei sich der Brechungsindex der Schicht dem des Substrats angleicht.

Die DE 10 2005 007 825 A1 beschreibt ein Substrat mit einer reflexionsmindernden Beschichtung, die Silicium, Sauerstoff, Kohlenstoff und Wasserstoff enthält, die jedoch nicht mit einem Laser bestrahlt ist.

Die DE 199 18 811 A1 beschreibt ein Substrat mit einer Antireflexbeschichtung. Dabei wird eine Silicium, Kohlenstoff, Sauerstoff und Wasserstoff enthaltende kolloid-disperse Lösung auf das Substrat aufgebracht und zum Entfernen der organischen Bestandteile auf Temperaturen von mindestens 600 Grad erhitzt. Es wird nicht offenbart, dass die Schicht von einem Laser bestrahlt ist.

Es ist somit Aufgabe der vorliegenden Erfindung ein Verfahren zu schaffen, mit dem eine reflexionsminderende Beschichtung aus Silizium, Sauerstoff, Kohlenstoff und Wasserstoff auf einem transparenten Substrat zuverlässig und unter einem deutlich geringeren Energieeinsatz als durch das Tempern herstellbar ist. Das Aussintern der aufgebrachten Schicht soll dabei zuverlässig vermieden werden.

Die Aufgabe wird durch das Verfahren gemäß Anspruch 1 gelöst.

Die reflexionsmindernde Beschichtung auf einem Substrat, bei dem mindestens eine Schicht, die Silizium und Sauerstoff sowie Wasserstoff und/oder Kohlenstoff enthält, wird in einem Beschichtungsverfahren auf mindestens einer Seite des Substrats abgeschieden. In einem anschließenden Verfahrensschritt wird die Schicht mit einem Laser bestrahlt, wobei die Energie des Laserstrahls von der Schicht selbst und nicht vom Substrat absorbiert wird und dadurch der Wasserstoff- und Kohlenstoffgehalt der Schicht in einer chemischen Reaktion vermindert wird.

Im erfindungsgemäßen Verfahren wird die Energie des Laserstrahls von der Schicht absorbiert. Lediglich ein geringer Anteil des Laserstrahls dringt bis zur darunterliegenden Substrat durch und gibt seine Energie an das Substrat ab. In der Schicht regt die eingekoppelte Energie eine chemische Reaktion an, bei der die organischen Gruppen aus Kohlenstoff- und Wasserstoffatomen abgetrennt werden. Durch die ausgelösten organischen Gruppen vergrößern sich die Hohlräume in der Schicht aus und senken dadurch den Brechungsindex.

Bei der chemischen Reaktion handelt es sich um eine Oxidation, so dass Wasserstoff als H₂O und Kohlenstoff als CO₂ oder CO vorwiegend in der Dampfphase entweicht bzw. ausdiffundiert.

Durch diese gezielte Energiezufuhr in die reflexionsmindernde Schicht reduziert sich der Energiebedarf auf ca. 1/10 der Energiemenge, die nach dem Stand der Technik für das Tempern benötigt wird. Das Substrat selbst wird nur leicht erwärmt, sodass sich im Substrat selbst keine Veränderungen ausbilden. Außerdem ist die Handhabung der Substrate bei Raumtemperatur einfacher zu bewerkstelligen.

Die Schicht wird zusätzlich einem physikalischen Plasma ausgesetzt. Die Einzelleistung des Lasers und die Einzelleistung des Plasmas wird so eingestellt, dass die Einzelleistungen des Lasers und des Plasmas nicht ausreichen, um die chemische Reaktion anzuregen, aber die Summe der Einzelleistungen des Lasers und des Plasmas die chemische Reaktion in ausreichendem Maße bewirken. Damit kann die Leistung des eingesetzten Lasers niedrig gehalten werden. Eine zu starke punktuelle Energiezufuhr, die z.B. eine Ablösung der Schicht vom Substrat bewirkt kann somit minimiert werden. Andererseits wird durch das Plasma die Reaktionsbereitschaft der Schicht erhöht und in Summe eine effektivere chemische Reaktion bewirkt.

Besonders vorteilhaft ist es, die Schicht zusätzlich mit einer Excimer-Lampe und/oder einem Excimer-Laser zu bestrahlen. Ein Excimer-Laser oder eine Excimer-Lampe emittiert Strahlung in niedrigen Ultraviolett (UV)-Bereich bei ca. 120-350 nm Wellenlänge. Die eingestrahlte Energie liegt im Bereich der molekularen Bindungsenergien, sodass Bindungen direkt aufgebrochen werden können. Dies stellt eine optimale Energieausnutzung dar und reduziert somit den Gesamtenergieverbrauch bei der Nachbehandlung der reflexionsmindernden Schicht.

Die Vorrichtung zur Herstellung eines transparenten Substrats mit einer reflexionsmindernden Beschichtung umfasst eine Beschichtungseinheit, die mindestens eine Schicht, die Silizium und Sauerstoff sowie Kohlenstoff und/oder Wasserstoff enthält, auf mindestens einer Seite des Substrats abscheidet. Die Vorrichtung weist zudem eine Nachbearbeitungseinheit auf, die eine Lasereinheit umfasst, die einen Laserstahl über das Substrat führt. Dabei wird die Energie des Laserstrahls überwiegend von der Schicht selbst und nicht vom Substrat absorbiert. Der Laserstrahl bewirkt eine chemische Reaktion in der Schicht, die den Kohlenstoff- und/oder Wasserstoffgehalt in der Schicht vermindert.

Vorteilhalfterweise umfasst die Lasereinheit einen CO₂-Laser oder Yttrium-Aluminium-Granat(YAG)-Laser, insbesondere einen Neodym(Nd):YAG oder einen Ytterbium(Yb):YAG umfasst. Die genannten Laser sind kommerziell in unterschiedlichen Ausführungen und Leistungsstufen erhältlich.

Da die meisten Glasarten und auch die reflexmindernde Schicht einen hohen Absorptionsgrad von Licht mit einer Wellenlänge von ca. 10 µm besitzen, eignet sich insbesondere der CO₂-Laser mit seiner spezifischen Wellenlänge von 10,6 µm für die Bearbeitung der Schicht. Yb:YAG-Laser emittieren bei einer Wellenlänge von 1030 nm, Nd:YAG-Laser bei 1064 nm. Der Nd:YAG-Laser erreicht hohe Energiedichten. Der Yb:YAG-Laser erreicht durch eine höhere Dotierung eine hohe Energiedichte bei kleinen Scheibendicken. Die YAG-Laser weisen wie der CO₂-Laser eine sehr gute homogene Strahlqualität auf, die eine gleichmäßige Energieeinkopplung in der Fläche ermöglicht.

Von Vorteil ist es, wenn die Lasereinheit zur Führung des Laserstrahls eine Spiegelanordnung mit einem rotierenden Polygonspiegel umfasst. Durch die Anzahl der flächigen Einzelscheiben des Polygonspiegels sowie die Umdrehungsgeschwindigkeit kann in einfacher Weise der Laserstrahl abgelenkt und über die reflexionsmindernde Schicht geführt werden. Somit ist ein zeilenweises Bestrahlen der Schicht möglich. Insbesondere ist der Übergang von einem Zeilenende auf einen auf der gegenüberliegenden Seite der Schicht beginnenden Zeilenanfang trägheitsfrei, also ohne das Abbremsen und erneute Beschleunigen von Strahlführungskomponenten möglich.

Ein Polygonspiegel besteht aus einem zylindrischen Grundkörper, der sich um seine Achse dreht. Auf der Zylinderoberfläche befinden sich plane Spiegel die mit ihrem Seitenrand aneinander grenzen und bündige Kanten bilden. Trifft der Laserstrahl auf einen dieser Spiegel, so wird er reflektiert und durch die Drehbewegung des Polygonspiegels zeilenartig geführt. Der Zeilenwechsel erfolgt beim Wechsel des Strahls von einem Spiegelsegment auf das nächste, der Grundkörper wird dabei gleichförmig weiterbewegt. Somit lässt sich eine schnelle und definierte Scanbewegung des Laserstrahls erreichen.

Dabei ist von Vorteil, dass das Substrat und die Nachbearbeitungseinheit in eine Transportrichtung relativ zueinander verschiebbar sind und die Lasereinheit den Laserstrahl senkrecht zur Transportrichtung über das Substrat führt. Die Strahlablenkung durch den Polygonspiegel zusammen mit der Bewegung des Substrats relativ zur Nachbearbeitungseinheit in Transportrichtung erlaubt das Überdecken des gesamten Substrats durch den Laserstrahl bei einer kontinuierlichen Bewegung einerseits in Transportrichtung als auch einer kontinuierlichen Bewegung des Polygonspiegels für die Führung des Laserstrahls senkrecht zur Transportrichtung.

Die Nachbearbeitungseinheit umfasst eine Plasmaeinheit, wobei die Plasmaeinheit in dem vom Laserlicht bestrahlten Bereich des Substrats ein Plasma erzeugt. Somit können der reflexmindernden Schicht kombiniert Energie durch das Laserlicht als auch durch das einwirkende Plasma zugefügt werden. Insbesondere umfasst die Plasmaeinheit ein Magneton oder eine Plasmaerzeugungseinheit basierend auf einer Barrieren-Entladung oder einen Nd:YAG-Laser zur Plasmaerzeugung. Insbesondere eine Plasmaeinheit basierend auf einer Barrieren-Entladung hat den Vorteil bei Atmosphärendruck zu arbeiten. Es muss kein Vakuum oder besondere Gasatmosphäre erzeugt werden, um das Plasma auszubilden. Ebenso sind keine Vorkehrungen zur Begrenzung des Plasmas, einem sogenannten Confinement (Eingrenzung), notwendig.

Vorteilhafterweise erzeugt die Plasmaeinheit ein Plasma auf der Schicht in einem Bereich, der bevorzugt die gesamte Ausdehnung senkrecht zur Transportrichtung umfasst, die vom Laserstrahl bestrahlt wird. Somit kann z.B. eine ortsfeste Plasmaeinheit realisiert werden und die Anregung der Schichts chon vor der Bestrahlung mit dem Laserlicht beginnen.

Es ist ebenso vorteilhaft, wenn die Plasmaeinheit einen Laser, insbesondere einen Nd:YAG-Laser zur Plasmaerzeugung umfasst und der Laser zur Plasmaerzeugung zusammen mit der Lasereinheit über das Substrat geführt wird. Dies reduziert weiter den Energieverbrauch und reduziert weiter die Erwärmung des Substrats.

Sehr vorteilhaft ist es, wenn die Nachbearbeitungseinheit eine Excimer-Lampe und/oder einen Excimer-Laser zur Bestrahlung der Schicht umfasst und die Excimer-Lampe bevorzugt den vom Laserstrahl bestrahlten Bereich senkrecht zur Transportrichtung bestrahlt. Eine Excimer-Lampe kann bevorzugt den gesamten vom Laserstrahl bestrahlten Bereich senkrecht zur Transportrichtung bestrahlen, während ein Excimer-Laser mit dem Laserstrahl und/oder dem Laserstrahl zur Erzeugung eines Plasmas mitgeführt werden kann. Somit ist eine gezielte energiesparende Anregung der chemischen Reaktion zur Auslösung von Kohlenstoff und Wasserstoff aus der aufgetragenen Schicht möglich. Durch die eingekoppelte Energie der Excimer-Lampe bzw. Excimer-Lasers, die im Bereich der Bindungsenergien des Kohlenstoffs und Wasserstoffs bzw. der daraus gebildeten organischen Gruppe liegt, können sie effizient die chemischen Reaktionen stimulieren.

Das transparente Substrat mit einer reflexionsmindernden Beschichtung, das gemäß dem Verfahren nach Anspruch 1 bis 6 hergestellt ist, umfasst eine Schicht auf mindestens einer Oberfläche des Substrats, wobei die Oberfläche eben und/oder gekrümmt geformt ist. Da zur Senkung des Wasserstoff und Kohlenstoffgehalts an der reflexionsmindernden Schicht wenig Energie dem Substrat zugeführt wird sind keinerlei Änderungen der Oberflächenform zu erwarten, sodass beliebige Oberflächenformationen mit reflexionsmindernder Beschichtung herstellbar sind.

Ausführungsbeispiele des erfindungsgemäßen Verfahren sind in derZeichnung beispielhaft dargestellt und werden anhand der nachfolgenden Beschreibung näher erläutert. Es zeigen:
- Fig. 1A,B: eine atomare Gitter-Struktur der reflexionsmindernden Schicht vor bzw. nach der Bestrahlung mit einem Laser in schematischer Darstellung;
- Fig. 2: ein erstes Ausführungsbeispiel einer Vorrichtung zur Herstellung einer reflexionsmindernden Schicht mit einer Lasereinheit in perspektivischer Ansicht;
- Fig. 3: ein zweites Ausführungsbeispiel einer Vorrichtung in Seitenansicht;
- Fig. 4: das zweite Ausführungsbeispiel aus Fig. 3 in Frontansicht;
- Fig. 5: ein drittes Ausführungsbeispiel einer Vorrichtung in Seitenansicht und
- Fig. 6: ein viertes Ausführungsbeispiel einer Vorrichtung mit laserinduziertem Plasma in perspektivischer Ansicht.

Einander entsprechende Teile sind in allen Figuren mit den gleichen Bezugszeichen versehen.

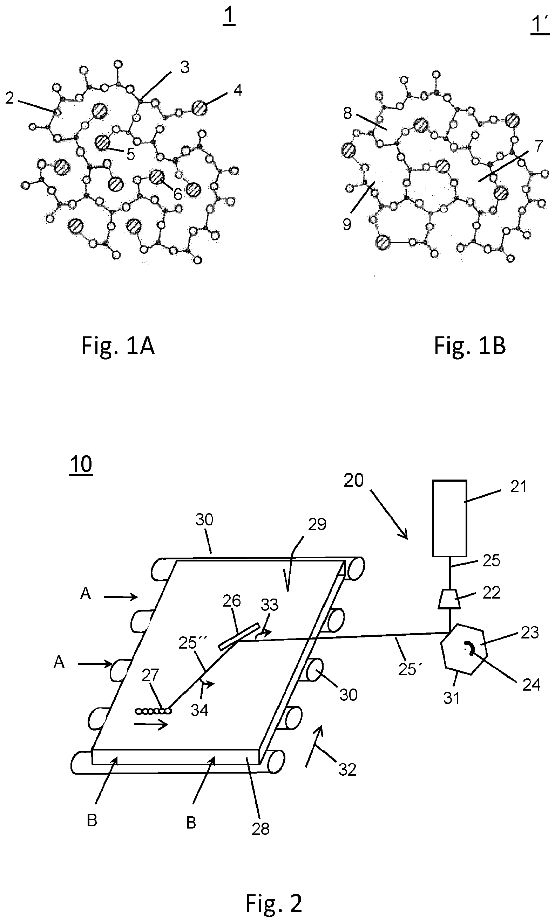

Fig. 1A zeigt die atomare Struktur einer reflexmindernden Schicht 1, die aus Sauerstoffatomen 2, Siliziumatomen 3 und organischen Gruppen 4, 5 und 6 aufgebaut ist, wie sie nach dem Beschichtungsverfahren auf dem Substrat vorliegt. Durch die Zuführung von Energie durch einen Laserstrahl findet eine chemische Reaktion, insbesondere Oxidation oder Nitrierung statt, die organische Gruppen im dargestellten Fall die organischen Gruppen 5 und 6 aus dem Verbund löst. Dadurch vergrößern sich die Hohlräume 7, 8, 9 die einen Brechungsindex ähnlich dem der Luft aufweisen und zusammen mit der verbleibenden Struktur einen mittleren Brechungsindex ergeben, der im Bereich zwischen 1,3 und 1,4 liegt.

Im Gegensatz zu einem Temperverfahren, in dem die abgeschiedene Schicht zusammen mit dem gesamten Substrat auf eine Temperatur von bis zu 600°C erhitzt wird, erfolgt bei dem erfindungsgemäßen Verfahren eine Auslösung der organischen Gruppen 4, 5, 6 durch eine gezielte Energiezufuhr in die Schicht. Somit ist der Energiebedarf durch das erfindungsgemäße Verfahren signifikant geringer als bei einem herkömmlichen Temperverfahren. Weiterhin wird das Substrat selbst nur sehr gering erhitzt, z.B. auf etwa 45°C, sodass keine Veränderungen im Substrat selbst stattfinden und keine Abkühlzeiten notwendig sind. Dies alles gestaltet das erfindungsgemäße Verfahren energiesparender und damit umweltverträglicher, kostengünstiger und zeitsparend.

Nachfolgend werden unterschiedliche Ausführungsbeispiele einer Vorrichtung zur Herstellung einer reflexionsmindernden Schicht beschrieben, die in den Figuren 2 bis 6 dargestellt sind.

Fig. 2 zeigt eine Vorrichtung zur Herstellung einer reflexionsmindernden Schicht mit einer Lasereinheit 20, die einen Laserstrahl 25 erzeugt, und mehreren Laserstrahl modifizierenden bzw. ablenkenden Komponenten 22, 24, 26. Ein Substrat 28 weist mindestens eine Oberfläche auf, die mit einer Schicht 29 versehen ist. Die Lasereinheit 20 besteht aus einem Laser 21, z.B. eine CO₂-Laser, einem Nd:YAG-Laser oder einem Yb:YAG-Laser. Der Laser 21 kann entweder im Dauerstrichbetrieb (cw-Betrieb) oder im gepulsten Betrieb arbeiten. Der emittierte Laserstrahl 25 wird bevorzugt durch einen optischen Strahlaufweiter, beispielsweise ein Teleskop, aufgeweitet und von einem Polygonspiegel 23 reflektiert. Der reflektierte 25' Strahl trifft auf einen Ablenkspiegel 26, der den Laserstrahl zur Schicht hin ablenkt.

Der optische Strahlaufweiter 22 weitet den Laserstrahl auf und sorgt für eine gleichmäßige Verteilung der Laserenergie über den gesamten Strahlquerschnitt, sodass der auf der Schicht 29 treffende Laserstrahl bzw. Laserspot eine gleichmäßige Energieverteilung in diesem Bereich aufweist. Der Polygonspiegel 23 besteht aus einem zylindrischen Grundkörper, auf dem ebene Spiegelelemente angebracht sind, die bündig aneinander stoßen. Bei Drehung des Polygonspiegels 23 z.B. im Uhrzeigersinn, wie durch den Pfeil 24 angedeutet, wird der Strahl 25' in Pfeilrichtung 33 auf dem Spiegel 26 abgelenkt. Der Laserstrahl 25' wandert also über den Spiegel 26 in Pfeilrichtung. Dadurch ändert sich der Einfalls- und damit in gleicher Weise der Ausfallswinkel des reflektierten Strahls 25", der somit zeilenweise über die Schicht 29 geführt wird. Auf der Schicht 29 reihen sich die Laserspots 27 zu einer durchgängigen Linie aneinander, in deren Bereich die vorher beschriebene chemische Reaktion der Schicht stattfindet.

Das Substrat 28 befindet sich vorzugsweise auf einer Transportvorrichtung 30, die über Rollen das Substrat 28 in eine Transportrichtung 32 bewegt. Beim Übergang des Laserstrahls 25 von einem planen Spiegelsegment des Polygonspiegels 23 zum nächsten planen Spiegelsegment wird der Laserstrahl 25" vom einen Ende der gescannten Zeile zum anderen Ende hin abrupt abgelenkt. Solange der Laserstrahl 25 über ein Spiegelsegment wandert, wandert der Strahl 25" in Pfeilrichtung 34 über die Schicht 29. Kombiniert mit der Transportrichtung 32 ergibt sich somit ein zeilenweises Abscannen der gesamten Schichtbreite und Schichtlänge. Bei sehr breiten Substraten, kann der Bestrahlungsvorgang in zwei oder mehrere Teilbereiche, die jeweils aneinander angrenzende Teile das Substrat überdecken, unterteilt werden.

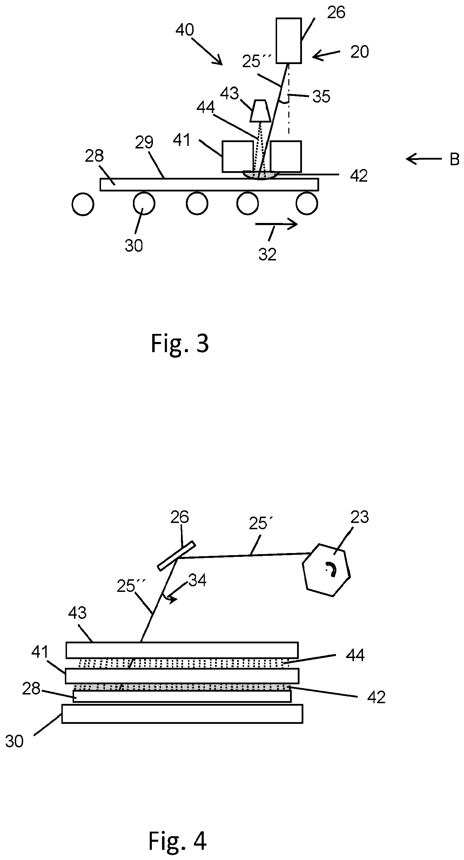

Fig. 3 zeigt nun eine Vorrichtung zur Herstellung der reflexionsmindernden Schicht mit einer Nachbearbeitungseinheit 40, die aus einer Lasereinheit 20, einer Plasmaeinheit 41 sowie einer Excimer-Lampe 43 steht. Das Substrat 28 befindet sich dabei, wie bereits in Fig. 2 beschrieben, auf einer Transportvorrichtung 30, die das Substrat in Transportrichtung 32 bewegt. Fig. 3 zeigt dabei die Vorrichtung in Seitenansicht, was einer Blickrichtung in Pfeilrichtung A in Fig. 2 entspricht.

In diesem Ausführungsbeispiel wird der Laserstrahl 25" unter einem Winkel 35 vom Spiegel 26 auf die Schicht 29 abgelenkt. Eine senkrechte Einstrahlung, wie durch die strichpunktierte Linie dargestellt, hat noch den kleinen Nachteil, dass von der Schicht 29 reflektiertes Laserlicht 25" direkt auf den Spiegel 26 zurückgeworfen wird und dabei den Spiegel 26 beschädigen könnte.

Die Plasmaeinheit 41 erzeugt beispielsweise durch Barrieren-Entladung ein Plasma 42, das im Bereich, in dem der Laserstrahl auf die Schicht 29 trifft, bereits einen Energieeintrag in die Schicht 29 leistet. Die Plasmaeinheit 41 weist eine Öffnung, z.B. einen Schlitz, auf, durch den der Laserstrahl 25" durch das Plasma hindurch auf die Schicht 29 trifft. In diesem Bereich trifft auch das von der Excimer-Lampe 43 emittierte Licht 44 auf die Schicht. Das von einer Excimer-Lampe 43 emittierte Licht hat eine Wellenlänge zwischen 120 nm und 350 nm. Somit werden Übergänge in der atomaren Struktur der Schicht induziert und die organischen Gruppen werden besonders effektiv ausgelöst. Die Nachbearbeitungsvorrichtung umfasst eine Lasereinheit 20 und eine Plasmaeinheit 41 und ggf. eine Excimer-Lampe 43. Lediglich die Leistungen der einzelnen Einheiten müssen aufeinander abgestimmt sein.

Fig. 4 zeigt die Vorrichtung aus Fig. 3 in Blickrichtung B in Fig. 2. Dabei ist die Lasereinheit 20 durch den Polygonspiegel 23 sowie dem Ablenkspiegel 26 und die Strahlen 25' und 25" vereinfacht dargestellt. Der Laserstrahl 25" wird, wie in Fig. 3 gezeigt, an der Excimer-Lampe 43 vorbei durch die Öffnung in der Plasmaeinheit 41 hindurch auf die Schicht 29 des Substrats 28 gelenkt. Wie in Fig. 2 beschrieben, wird der Laserstrahl 25" in eine Richtung senkrecht zur Transportrichtung 32 über die Schicht geführt. Die Lasereinheit 41 sowie die Excimer-Lampe 43 erstrecken sich über diese gesamte vom Laserstrahl 25" abgescannte Ausdehnung, sodass der Laserstrahl 25" in die bereits mit dem Plasma 42 und dem Excimer-Licht behandelte Substratbereich trifft. Somit ist in diesem Bereich die Energiezufuhr ausreichend, um die chemische Reaktion in der Schicht 29 im gewünschten Maße zu bewirken. Der Energieeintrag des Plasmas 42 sowie der Excimer-Lampe reichen für sich noch nicht aus um diese chemische Reaktion im gewünschten Maße zu induzieren. Bei der chemischen Reaktion handelt es sich um eine Oxidation oder eine Nitrierung. Dabei wird in der Regel der Sauerstoffgehalt bzw. Stickstoffgehalt der Umgebungsluft ausreichen. Eventuell kann die Reaktion aber auch in einer speziellen Kammer durchgeführt werden, die mit Sauerstoff bzw. Stickstoff gespült wird.

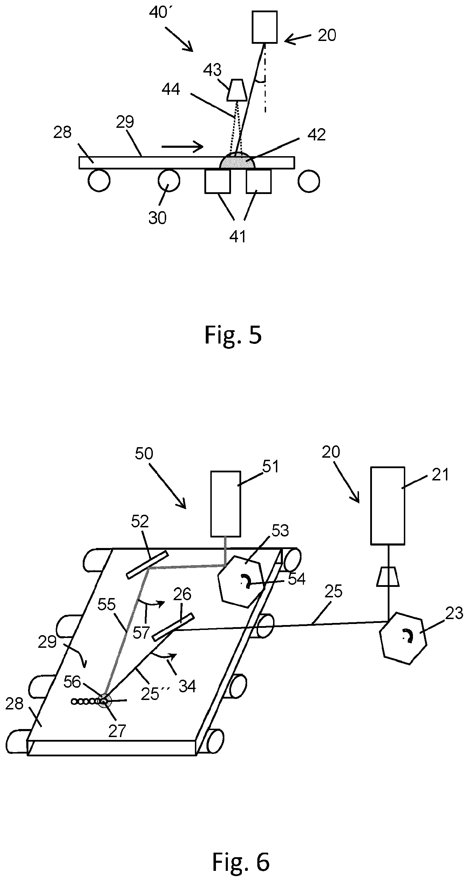

Fig. 5 zeigt eine Nachbearbeitungseinheit 40' die ebenfalls eine Lasereinheit 20, eine Plasmaeinheit 41 sowie eine Excimer-Lampe 43 umfasst. Während die Lasereinheit 20 sowie die Excimer-Einheit 43 auf der mit der Schicht 29 versehenen Oberfläche des Substrats 28 zugewandten Seite angebracht sind, ist die Plasmaeinheit 41 auf der gegenüberliegenden Seite des Substrats 28 angebracht. Das Plasma 42 bildet sich jedoch auf der Seite des Substrats 28, das der Schicht 29 zugewandt ist. Mit einer solchen Anordnung der Plasmaeinheit 41 könnte auch eine beidseitige Nachbehandlung des Substrats 28, das auf beiden Oberflächen mit einer Schicht 29 beschichtet ist durch hinzufügen einer zweiten Lasereinheit und/oder einer zweiten Excimer-Einheit durchgeführt werden, wobei das Plasma je nach Prozessführung auf jeweils einer oder beiden Seiten des Substrats 28 zündet.

Die Plasmaeinheit 41 kann ein Plasma durch elektrische Hochspannung wie bei einer Barrieren-Entladungsvorrichtung durch Gleichspannung, durch eine Wechselspannung im Mittelfrequenzbereich, durch eine Wechselspannung im Radiofrequenzbereich oder auch durch eine Mikrowellenstrahlung oder mit Hilfe eines Lasers induzieren. Die Plasmaeinheit 41 kann bei Atmosphärendruck oder aber auch in einem Vakuum oder in einer besonderen Gasatmosphäre betrieben werden. Ebenso kann das Plasma 42 durch elektromagnetische Vorkehrungen in seiner Ausbreitung eingeschränkt und in einem sogenannten Confinement , z.B. durch ein elektromagnetische Hochfrequenz-Feld, gehalten werden.

Fig. 6 stellt eine Vorrichtung zur Herstellung der reflexionsmindernden Schicht 29 mit einer Lasereinheit 20 sowie einer Plasmaeinheit 50 dar, wobei die Plasmaeinheit 50 einen Laser 51 umfasst. Neben der Lasereinheit 20, hier dargestellt durch den Laser 21, den Polygonspiegel 23, den Ablenkspiegel 26 sowie den über die Schicht 29 geführten Laserstrahl 25", wird das Plasma ebenso durch ein Lasersystem mit ähnlicher Ablenkvorrichtung auf die Schicht 29 gerichtet. Der Laser 51 ist beispielweise ein Nd:YAG-Laser, der mit hoher Energiedichte arbeitet. Der verwendete Polygonspiegel 53 ist dabei auf die Wellenlänge und Intensität des Lasers 51 ausgelegt. Die Drehgeschwindigkeit des Polygonspiegels 53 ist mit dem Polygonspiegel 23 aus der Lasereinheit 21 vorzugsweise gekoppelt, sodass eine exakt gleiche Strahlenführung und somit Platzierung des Laserspots 27 sowie des Laserstrahls 55 auf der Schicht 29 gegeben ist.

Der Laserstrahl 55 trifft auf ein Target, das sich in direkter Nachbarschaft des Laserstrahls 25" befindet und löst dabei Ionen und Elektronen aus dem Target aus und erzeugt so einen Laser-induzierten Plasmaspot 56. Dieser wandert mit dem Laserstrahl zeilenwiese über die Schicht 29. Das Target für die Plasmaerzeugung kann sich beispielsweise über die gesamte Breite des Substrats 28 erstrecken, wobei das Substrat 29 unter dem Target hinweg wandert.

Alle beschriebenen und/oder gezeichneten Merkmale können im Rahmen der Erfindung vorteilhaft miteinander kombiniert werden. Insbesondere können die unterschiedlichen genannten Lasertypen einer Lasereinheit mit den unterschiedlichen Arten der Plasmaerzeugung kombiniert werden. Ebenso kann statt einer Excimer-Lampe ein Excimer-Laser zur Bestrahlung mit UV-Licht mit der Lasereinheit mitgeführt werden, sodass sowohl der Laserstrahl als auch die Excimer-Bestrahlung und auch die Plasmaerzeugung auf einen einzigen Punkt fokussiert sind und gemeinsam zeilenweise über das Substrat wandern. Die beschriebenen Vorrichtungen können für eine einseitige Nachbehandlung einer Schicht 29 als auch zu einer gleichzeitigen Nachbehandlung von beidseitig des Substrats 28 aufgetragen Schichten verwendet werden.

## Patentansprüche

1. Verfahren zur Herstellung einer reflexionsmindernden Beschichtung auf einem Substrat (28), bei dem mindestens eine Schicht (29), die Silizium und Sauerstoff und Kohlenstoff und Wasserstoff enthält, in einem Beschichtungsverfahren auf mindestens einer Seite des Substrats (28) abgeschieden wird,
**dadurch gekennzeichnet,**
**dass** in einem anschließenden Verfahrensschrittdie Schicht (29) von einem Laser (21) bestrahlt wird und **dadurch** der Wasserstoff-Gehalt und KohlenstoffGehalt der Schicht (29) in einer chemischen Reaktion vermindert wird, wobei die chemische Reaktion eine Oxidation und/oder Nitrierung ist,
**dass** auf den vom Laserlicht bestrahlten Bereich der Schicht (29) zusätzlich ein physikalisches Plasma (42) einwirkt, und
**dass** eine Einzel-Leistungsdichte des Lasers (21) und eine Einzelleistung des Plasmas (42) so eingestellt sind, dass die Einzel-Leistungsdichte des Lasers (21) und die Einzel-Leistungsdichte des Plasmas (42) nicht ausreichen, die chemische Reaktion anzuregen, die Summe derEinzel-Leistungsdichten des Lasers (21) und des Plasmas (42) aber die chemische Reaktion in ausreichendem Maße bewirkt.

2. Verfahren nach Anspruch 1,
**dadurch gekennzeichnet,**
**dass** die Einstrahlung des Laserstrahls (25) durch einen CO₂-Laser, einen Nd(Neodym):YAG-Laser oder einen Yb(Ytterbium):YAG-Laser erfolgt.

3. Verfahren nach Anspruch 1,
**dadurch gekennzeichnet,**
**dass** das Plasma (42) mit Hilfe einer elektrischen Hochspannung, einer Gleichspannung, einer Wechselspannung im Mittelfrequenzbereich, einer Wechselspannung im Radiofrequenzbereich, einer Mikrowellenstrahlung oder mit Hilfe eines Lasers (51) induziert wird, insbesondere dass zur Erzeugung des Plasmas (42) eine Barrieren-Entladung, eine Magnetron oder ein Nd:YAG Laser verwendet wird.

4. Verfahren nach einem der Ansprüche 1 bis 3, **dadurch gekennzeichnet,**
**dass** das Plasma (42) durch ein Hochfrequenz-Feld räumlich begrenzt wird.

5. Verfahren nach einem der Ansprüche 1 bis 4,
**dadurch gekennzeichnet,**
**dass** die Schicht (29) zusätzlich mit einer Excimer-Lampe (43) bestrahlt wird.

6. Verfahren nach einem der Ansprüche 1 bis 5,
**dadurch gekennzeichnet,**
**dass** die Schicht (29) vor der Behandlung mit Laserlicht (25) eine Schichtdicke zwischen 120nm und 170nm, bevorzugt eine Schichtdicke zwischen 130nm und 160nm und besonders bevorzugt etwa 150nm aufweist, und die Schicht (29) nach der Behandlung mit Laserlicht (25) und/oder einem Plasma (42) und/oderder Excimer-Lampe (43) eine Schichtdicke zwischen 80nm und 110nm, bevorzugt eine Schichtdicke von etwa 100nm aufweist.

## Claims

1. Method for manufacturing a reflection-reducing coating on a substrate (28) in which at least one coating (29) which contains silicon and oxygen and carbon and hydrogen, is deposited on at least one side of the substrate (28) in a coating method,
**characterised in that**
in a consecutive method step the coating (29) is irradiated by a laser (21) and through this the hydrogen content and carbon content of the coating (29) is reduced in a chemical reaction, the chemical reaction being an oxidation and/or nitration reaction,
in addition a physical plasma (42) acts on the region of the coating (29) irradiated by the laser light, and
an individual power density of the laser (21) and an individual power density of the plasma (42) are set so that the individual power density of the laser (21) and the individual power density of the plasma (42) are not sufficient to stimulate the chemical reaction but the sum of the individual power densities of the laser (21) and the plasma (42) produces the chemical reaction to a sufficient degree.

2. Method according to claim 1,
**characterised in that**
the application of the laser beam (25) is effected by a CO₂ laser, an Nd(neodymium):YAG laser or a Yb(ytterbium):YAG laser.

3. Method according to claim 1,
**characterised in that**
the plasma (42) is induced with the aid of an electrical high voltage, a direct current voltage, an alternating current voltage in the medium frequency range, an alternating current voltage in the radio frequency range, a microwave radiation or with the aid of a laser (51), in particular **in that** a barrier discharge, a magnetron or an Nd:YAG laser is used to generate the plasma (42).

4. Method according to one of claims 1 to 3,
**characterised in that**
the plasma (42) is spatially delimited by a high frequency field.

5. Method according to one of claims 1 to 4,
**characterised in that**
in addition the coating (29) is irradiated with an excimer lamp (43).

6. Method according to one of claims 1 to 5,
**characterised in that**
before the treatment with laser light (25) the coating (29) has a coating thickness of between 120 nm and 170 nm, preferably a coating thickness of between 130 nm and 160 nm and particularly preferably approximately 150 nm, and after the treatment with laser light (25) and/or a plasma (42) and/or the excimer lamp (43) the coating (29) has a coating thickness of between 80 nm and 110 nm, preferably a coating thickness of approximately 100 nm.

## Revendications

1. Procédé pour la réalisation d'un revêtement diminuant la réflexion sur un substrat (28), d'après lequel au moins une couche (29), qui renferme du silicium et de l'oxygène et du carbone et de l'hydrogène, est déposée par un procédé de revêtement, sur au moins un côté du substrat (28),
**caractérisé**
**en ce qu'**au cours d'une étape de procédé suivante, la couche (29) est irradiée par un laser (21) en produisant ainsi une diminution de la teneur en hydrogène et de la teneur en carbone de la couche (29) au cours d'une réaction chimique, ladite réaction chimique étant une oxydation et/ou une nitruration,
**en ce qu'**un plasma physique (42) agit en supplément sur la zone de la couche (29) irradiée par la lumière laser, et
**en ce qu'**une densité de puissance individuelle du laser (21) et une puissance individuelle du plasma (42) sont réglées de manière telle, que la densité de puissance individuelle du laser (21) et la densité de puissance individuelle du plasma (42) ne suffisent pas à produire l'excitation de la réaction chimique, mais que la somme des densités individuelles du laser (21) et du plasma (42) produise la réaction chimique de manière suffisamment importante.

2. Procédé selon la revendication 1,
**caractérisé**
**en ce que** l'irradiation par le rayonnement laser (25) est effectuée par un laser CO₂, un laser Nd(néodyme) :YAG ou un laser Yb(ytterbium):YAG.

3. Procédé selon la revendication 1,
**caractérisé**
**en ce que** le plasma (42) est induit à l'aide d'une haute tension électrique, d'une tension continue, d'une tension alternative dans le domaine des fréquences moyennes, d'une tension alternative dans le domaine des fréquences radio, d'un rayonnement microondes ou bien à l'aide d'un laser (51), notamment **en ce que** pour la production du plasma (42), on utilise une décharge à barrière, un magnétron ou un laser Nd:YAG.

4. Procédé selon l'une des revendications 1 à 3,
**caractérisé**
**en ce que** le plasma (42) est délimité spatialement par un champ hautes fréquences.

5. Procédé selon l'une des revendications 1 à 4,
**caractérisé**
**en ce que** la couche (29) est irradiée en supplément à l'aide d'un lampe à excimère (43).

6. Procédé selon l'une des revendications 1 à 5,
**caractérisé**
**en ce que** la couche (29) présente, avant le traitement par la lumière laser (25), une épaisseur de couche entre 120nm et 170nm, de préférence une épaisseur de couche entre 130nm et 160nm, et de manière particulièrement préférée d'environ 150nm, et la couche (29) présente, après le traitement par la lumière laser (25) et/ou un plasma (42) et/ou la lampe à excimère (43), une épaisseur de couche entre 80nm et 110nm, de préférence une épaisseur de couche d'environ 100nm.
